# EUROPEAN PATENT SPECIFICATION

(11) **EP 2 857 264 B1**
(45) Date of publication and mention of the grant of the patent: **20.12.2017**
(21) Application number: 13187176.6
(22) Date of filing: 02.10.2013
(51) Int. Cl.: B60R 16/02, H02G 3/22

(54) **A grommet and method for assembling thereof**
Durchführungshülse und Verfahren zum Zusammenbau derselben
Passe-fil et procédé d'assemblage associé

(43) Date of publication of application: 08.04.2015
(73) Proprietor: Fico Triad, S.A., 08232 Viladecavalls (ES)
(72) Inventor: Kaynar, Kayhan, GEMLIK-BURSA (TR); Karabulut, Husyin, GEMLIK-BURSA (TR)
(74) Representative: ZBM Patents - Zea, Barlocci & Markvardsen

(56) References cited:
- DE-A1- 10 140 714
- US-A1- 2007 137 892

## Description

A grommet and a method for assembling thereof are disclosed herein.

### BACKGROUND

Grommets are hollow assembled or single pieces made of substantially flexible materials such as rubber, plastic or the like. Grommets are designed to prevent cables, wires, ropes, sheaths, conduits and the like from being damaged when passing through holes or openings formed in walls or partitions separating inner and outer spaces, for example in vehicles. In the particular application of vehicles, grommets are used to seperate the passenger side from the engine side.

Grommets are also designed to protect cables, wires, ropes, sheaths, conduits and the like against dust, liquids, water or the like. In such applications, in addition to provide protection as well as shielding and covering for such cables, wires, ropes or conduits, an easy fitting of the grommet into wall holes or openings as well as good insulation properties are also required.

Document EP1391020 discloses a grommet with sound insulation features. Such grommet comprises an inner tubular portion for holding a wire for penetrating a circular through panel hole to pass therethrough, an outer tubular portion coaxially outside the inner tubular portion, and an elastic shield wall defining an airspace shielded from the outside for sound insulation purposes.

DE10140714 refers to a grommet comprising a main body to be fitted through a wall and tightened therein through flexible sealing lips for leading a cable. An acoustic disc is provided for acoustic sealing and for centring the cable. The lips and the disc define chambers inside the body.

US2007137892 also provides a grommet having a body and a connector coupled to the grommet body through a blocking lip. The connector has openings for the passage of cables through a wall.

The configuration of such grommet with an air space that is defined by a shield wall for sound insulation properties still requires an improvement for a better general insulation capability.

### SUMMARY

A grommet as defined in claim 1 is disclosed herein which provides improved general insulation and sealing features. A method for assembling such grommet as defined in claim 13 is also disclosed herein which facilitates assembling of the grommet itself and its fitting in holes or openings in walls or partitions such as in a car body. Advantageous embodiments are defined in the dependent claims.
The present grommet comprises a body made of a flexible material and conveniently sized and shaped to be appropriately fitted at least partially through a hole or an opening defined in a wall, partition, or the like, such as in a car body, as stated above.
The body of the present grommet is provided with inner conduit means that are formed in the body. The conduit means are designed for the purpose of receiving at least one portion of at least one cable, wire, rope, sheath, conduit or the like, or a combination thereof. The inner conduit means may comprise one or more conduits. For example, in applications for automatic push-pull cables, for example for shift cables in automatic transmission vehicles, a single conduit may be provided while in other applications, for example for shift and select cables in manual transmission vehicles, two conduits may be provided. Conduit means are generally formed inside the body of the grommet such that they pass therethrough The body of the grommet comprises at least a main grommet element and a connector, and a cover as it will explained further below.
The main grommet is intended to be in contact with a wall of the car body where the grommet is installed. The main grommet is provided with one or more flexible lips, such as a peripheral lip. When the grommet is being installed into the opening of the car body wall, the lips close so that no air leaks are between the main grommet and the lips, and consequently the car body wall, providing good sealing once the grommet has ben fully installed.
The connector is intended to hold the complete grommet assembly together. The connector is assembled to the main grommet, e.g. attached by gluing or by overmolding as it will be explained below.The connector is provided with hook members suitable for performing a retention function against pulling out. The connector hook members close as the grommet is installed and open once the grommet has been fully installed into the hole of the wall of the car body.
The hook members of the connector cooperates with the lips of the main grommet so that grommet lips are pressed by the connector hook members once the grommet assembly is installed.
The main grommet element may be formed, for example, of rubber or equivalent flexible materials such as an ethylene propylene diene monomer (M-class) (EPDM) rubber, a nitrile butediene rubber (NBR), a chloroplene rubber (CR), silicone rubber, etc. or a combination thereof with different mechanical properties, such as hardness as long as the grommet, once assembled, can be passed easily through a hole or an opening defined in a wall, partition, or the like, such as in a car body but it is difficult to remove it therefrom.
The connector may include a number of hook members and it may be made, for example, of an appropriate plastics material.
The body of the present grommet is further provided with a number of insulation chambers formed therein, such as for example three chambers.
The shape, size, arrangement and orientation of the chambers may be any according to the specific requirements. The above mentioned inner conduit means of the body may comprise at least one conduit which may be arranged passing through at least one of the above mentioned chambers.
The insulation chambers may be manufactured and/or configured to provide one or more of acoustic insulation (i.e. against sound, noise, etc.), thermal insulation, moisture insulation, etc. For example, the insulation chambers may be air chambers defined for example by walls of the grommet body. However, in preferred embodiments, the chambers may be formed by walls of the cover between which air is present.
In any case, one or more of the chambers may be formed at least substantially parallel to a longitudinal plane of the main grommet element. In alternative embodiments, however, one or more of the chambers may be formed at least substantially perpendicular to said longitudinal plane of the main grommet element. In other embodiments, one or more of the chambers may be formed at least substantially inclined with respect to a longitudinal plane of the main grommet element. Still in further embodiments, there may be one or more chambers formed at least substantially parallel to the longitudinal plane of the main grommet element and one or more chambers formed at least substantially perpendicular and/or inclined to said longitudinal plane of the main grommet element.

In use, or when the grommet is assembled, the connector is arranged at least partially surrounded by the main grommet element.

As indicated above, the body of the present grommet further comprises a cover which may be formed, for example, of rubber or equivalent flexible materials such as EPDM, NBR, CR, silicone, etc. or a combination thereof with different mechanical properties, such as hardness. In use, or when the grommet is assembled, the cover may be arranged at least partially surrounded by the connector.
As used herein, the feature that one part is at least partially surrounded by another part means that one part at least partially encircles the other part such that one is at least partially confined by the other. In some embodiments, surrounding may be defined peripherally.

As stated above, the chambers are formed in the cover, that is, the cover is provided with walls extending inside the grommet body defining said chambers. Therefore, the cover of the grommet, is to be assembled into the main grommet for defining the insulation chambers once assembled.
This feature provides the present grommet with high insulation properties, not only against noise but heat, moisture, etc. In one example, the chambers may be formed by substantially parallel walls of the cover between which a fluid, such as for example air, is present. This feature provides the present grommet with high acoustic insulation properties. In applications where not high performance insulation is required, the grommet may not be provided with cover in which case no insulation chambers are provided by the cover. Such a case is, however, not claimed and not part of the invention. In such a non-claimed case the insulation chambers could be formed inside the main grommet element, for example. Other non-claimed alternative solutions for chamber formation are not ruled out when no cover is provided. For example, for high pull out requirements the connector may be attached, e.g. glued, to the main grommet.
A method for assembling such grommet is also provided herein. The method comprises all steps of claim 10, inter alia providing a main grommet element and providing a connector, and assembling the connector such that it is arranged ***at*** least partially surrounded by the main grommet element. Then the connector is attached, e.g. glued, to the main grommet element.

The method further comprises the step of assembling a cover such that the cover is arranged at least partially surrounded by the connector. The cover, which may include walls defining air chambers, for example, may be first assembled into the main grommet element and then the connector may be assembled to the main grommet element. Once the grommet is assembled, the assembly is pressure fitted for passing through an opening or hole formed in a wall or partition of a car body.

No additional tools, equipment and parts, such as screws, are required. Costs are thus advantageously reduced.
The present grommet provides improved insulation and sealing features such as against sound, heat and moisture. In motor vehicles, for example, the present grommet provides good insulation from the passenger and engine sides.
Additional objects, advantages and features of embodiments of the present grommet and method for its assembling will become apparent to those skilled in the art upon examination of the disclosure or may be learned by practice thereof.

### BRIEF DESCRIPTION OF THE DRAWINGS

Particular embodiments of the present grommet and method for its assembling will be described in the following by way of non-limiting examples, with reference to the appended drawings, in which:
Figure 1 is a general perspective view of one example of the present grommet;
Figure 2 is a perspective view of the connector of the grommet shown in figure 1;
Figure 3 is a perspective view of the cover of the grommet shown in figure 1;
Figure 4 is a perspective view of the main grommet element of the grommet shown in figure 1;
Figure 5 is a perspective view of a non-claimed grommet shown in figure 1, without cover, fitted into a wall;
Figure 6 is a longitudinal sectional perspective view of the grommet shown in figure 1 for showing the chambers; and
Figure 7 is an elevational cross-sectional view of the cover of the grommet shown in figure 1.

### DETAILED DESCRIPTION OF EMBODIMENTS

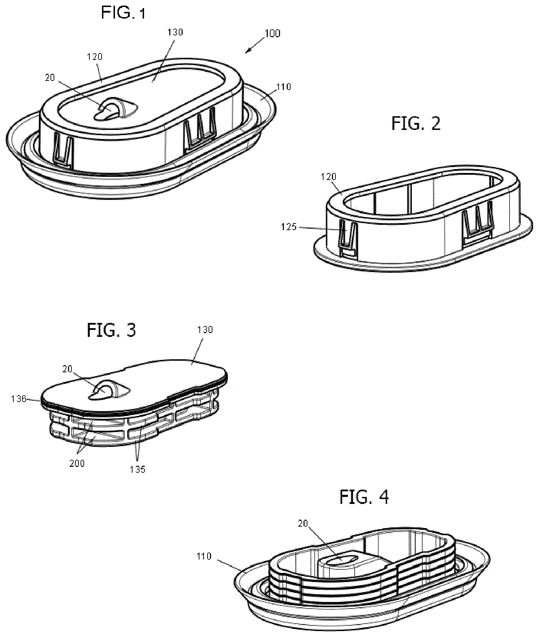

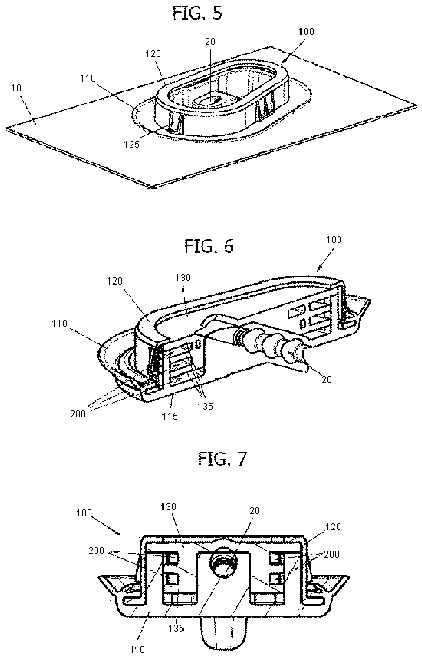

Two possible embodiments of the present grommet are shown in the figures. Figures 1, 6 and 7 show a first embodiment of the present grommet provided with cover for enhanced insulation features and figure 5 shows a example non-claimed grommet with no cover.

Like reference numerals refer to like parts throughout the description of several views of the drawings.
Both embodiments of the present grommet have been indicated in all cases as a whole by reference numeral 100. In both embodiments, the present grommet 100 comprises a body designed to be easily fitted through an opening defined in a wall 10 which, in this specific example, belongs to a car body. The body of the grommet 100 has inner conduit means that comprise a single inner conduit 20. In the example shown, the inner conduit 20 is sized for conveniently receiving at least one portion of an automatic push-pull cable (not shown). In other applications, such ***as*** for manual cables, two inner conduits 20 may be provided. As shown in figures 6 and 7 of the drawings, the inner conduit 20 is formed inside the body of the grommet such that it passes therethrough.
In both embodiments, the body of the present grommet 100 comprises a main grommet element 110 and a connector 120. In the embodiment of figures 1, 6 and 7 the grommet 100 has a cover 130 while in the non-claimed example of figure 5 the grommet 100 has no cover 130.

The main grommet 110 is intended to be in contact with the car body wall 10 and it is provided with a peripheral lip that closes when the main grommet 120 is fitted into the opening of the car body wall 10 such that there is no air leak. As shown in figure 7, the main grommet 110 extends defining double lips whose design provides a better acoustic insulation for high frequencies. After lips contact the wall 10 an air room is defined between the lips.
The inner conduit has been indicated in the drawings by reference numeral 20 although inner conduit 20 is defined by separate conduit members belonging to both the grommet element 110 and the cover 130 as shown in figures 1, 3 and 4.
In the embodiment shown in figures 1, 6 and 7 in which the grommet 100 has cover 130, both the main grommet element 110 and the cover 130 are in this case made of rubber or similar flexible materials such as an ethylene propylene diene monomer (M-class) (EPDM) rubber, a nitrile butediene rubber (NBR), a chloroplene rubber (CR), silicone rubber, etc. or a combination thereof with different mechanical properties, such as hardness.
The connector 120 is intended to hold the complete grommet assembly together. It is made of plastic and includes a number of hook members 125. The hook members 125 perform a retention function against pulling out; they close as the grommet 100 is installed and open once the grommet 100 has been fully installed into the hole of the car body wall 10. The hook members 125 of the connector 120 cooperates with the peripheral lip of the main grommet 110 so that such peripheral lip is pressed by the connector hook members 125 once the grommet assembly 100 is installed.
When the grommet 100 is assembled, the connector 120 is arranged surrounded by the main grommet element 110 and the cover 130, in this embodiment, is arranged surrounded by the connector 120. In the embodiment shown in figure 5, the construction is similar to the above embodiment but without the cover 130. In this embodiment, the cover 130 is provided with small peripheral ribs 136 for providing a good sealing. A good airtight assembly of the cover 130 and the connector 120 is thus achieved.
Still referring to the embodiment shown in figures 1, 6 and 7, a number of insulation chambers 200 are formed. As shown in sectional figures 6 and 7, three insulation chambers 200 are formed inside the grommet 100. In this example, the inner conduit 20 passes through said insulation chambers 200. The insulation chambers 200 are formed to provide one or more of acoustic insulation, thermal insulation, moisture insulation, etc. In this specific example, the insulation chambers are air chambers 200.
In the embodiments shown, three insulation chambers 200 are formed by the cover 130 in order to provide high performance insulation. Specifically, the three insulation chambers 200 in the example shown are defined by corresponding three parallel walls 135 of the cover 130 as shown in figures 6 and 7. Specifically, a first upper air insulation chamber 200 is defined within the grommet 100 formed by a first upper wall 135 of the cover 130 and a second, intermediate wall 135 of the cover 130; a second, intermediate air insulation chamber 200 is defined within the grommet 100 formed by the second, intermediate wall 135 of the cover 130 and a third, lower wall 135 of the cover 130; and a third lower air insulation chamber 200 is defined within the grommet 100 formed by the third, lower wall 135 of the cover 130 and a bottom wall 115 of the main grommet element 110, as shown in said figures 6 and 7 of the drawings. The interior volume of each insulation chamber 200 defined by the spacing between the walls 135 of the cover 130 and the bottom wall 115 of the main grommet element 110 may be varied according to the requirements.

In this example, the air chambers 200 are formed parallel to a longitudinal plane of the main grommet element 110 so they are arranged substantially horizontal in the drawing. Other arrangements are possible. For example one or more of the insulation chambers 200 could be formed perpendicular and/or inclined to a longitudinal plane of the main grommet element 110. In all cases, this longitudinal plane of the main grommet element 110 may be for example a horizontal plane in the drawings containing the peripheral edge of the main grommet element 110.

For assembling the grommet 100 a main grommet element 110 element and a connector 120 are provided. Then, the connector 120 is assembled such that it is arranged ***at*** least partially surrounded by the main grommet element 110. Then the connector 120 is attached, e.g. glued, to the main grommet element 110. If cover 130 is required, the cover 130 is first assembled into the main grommet element 110 and then the connector 120 is attached, e.g. glued, to the main grommet element 110. The cover 130 is assembled such that it is arranged ***at*** least partially surrounded by the connector 120.

Once assembled, the grommet assembly 100 defines a closed box design with an efficient airtight assembly. The grommet assembly 100 can be thus pressure fitted for passing through an opening in the wall 10 of the car body such that both sides thereof are properly insulated and sealed against noise, heat, moisture, etc.

It has been shown that the simplicity of the present design allows an efficient grommet assembly 100 to be obtained which can be passed easily through a hole or an opening defined in a wall 10 in a car body with small attachment force, of the order of 50N, but which in turn is difficult to remove from the wall 10 of the car body, with a high dettachment force, of the order of above 300N, being required.

## Claims

1. Grommet (100) comprising a body intended to be fitted through a wall (10), the grommet (100) having inner conduit means (20) for receiving at least one cable, wherein the body comprises at least a main grommet element (110), a connector (120) arranged at least partially surrounded by and attached to the main grommet element (110), a number of insulation chambers (200) provided therein, and a cover (130), **characterized in that** the cover (130) is arranged at least partially surrounded by the connector (120) and provided with walls (135) extending inside the body such that the walls (135) define said insulation chambers (200) once the cover (130) is assembled into the main grommet element (110).

2. Grommet (100) as claimed in claim 1*,* wherein at least one of said insulation chambers are air chambers (200).

3. Grommet (100) as claimed in claim 1 or claim 2, wherein the body comprises three insulation chambers (200).

4. Grommet (100) as claimed in any of the preceding claims, wherein the interior volume of the insulation chambers (200) is defined by a spacing between the walls (135) of the cover (130) and a bottom wall (115) of the main grommet element (110).

5. Grommet (100) as claimed in any of the preceding claims, wherein the insulation chambers (200) are formed by substantially parallel walls (135) of the cover (130).

6. Grommet (100) as claimed in any of the preceding claims, wherein the inner conduit means comprises at least one conduit (20) passing through at least one of the insulation chambers (200).

7. Grommet (100) as claimed in any of the preceding claims, wherein the connector (120) includes a number of hook members (125).

8. Grommet (100) as claimed in any of the preceding claims, wherein the insulation chambers (200) are formed at least substantially parallel to a longitudinal plane of the main grommet element (110).

9. Grommet (100) as claimed in any of the claims 1-7, wherein the insulation chambers (200) are formed at least substantially perpendicular to a longitudinal plane of the main grommet element (110).

10. Method for assembling a grommet (100) comprising a body intended to be fitted through a wall (10), the grommet (100) having inner conduit means (20) for receiving at least one cable, wherein the body comprises at least a main grommet element (110) a connector (120) and a cover (130), with the body being further provided with a number of insulation chambers (200) therein, the method comprising assembling a connector (120) such that the connector (120) is arranged at least partially surrounded by a main grommet element (110), then attaching the connector (120) to the main grommet element (110) and assembling a cover (130) such that the cover (130) is arranged at least partially surrounded by the connector (120).

11. Method as claimed in claim 10, wherein it further comprises the step of pressure fitting the assembled grommet (100) so that the grommet (100) at least passes through a wall (10).

## Patentansprüche

1. Durchführungshülse (100) umfassend einen Körper, der zum Einpassen durch eine Wand (10) bestimmt ist, wobei die Durchführungshülse (100) eine innere Rohrleitung (20) zum Empfang von mindestens einem Kabel hat, wobei der Körper mindestens ein Hauptdurchführungselement (110), ein Anschlussteil (120), das mindestens teilweise vom Hauptdurchführungselement (110) umgeben ist und an diesem befestigt ist, eine Anzahl von Isolierkammern (200), die darin bereitgestellt sind, und einen Deckel (130) umfasst, **dadurch gekennzeichnet, dass** der Deckel (130) mindestens teilweise vom Anschlussteil (120) umgeben ist und mit Wänden (135) verstehen ist, die sich im Körper so erstrecken, dass die Wände (135) die Isolierkammern (200) definieren, nachdem der Deckel (130) im Hauptdurchführungselement (110) montiert worden ist.

2. Durchführungshülse (100) wie in Anspruch 1 beansprucht, wobei mindestens eine der Isolierkammern Luftklammern (200) sind.

3. Durchführungshülse (100) wie in Anspruch 1 oder Anspruch 2 beansprucht, wobei der Körper drei Isolierkammern (200) umfasst.

4. Durchführungshülse (100) wie in einem der vorhergehenden Ansprüche beansprucht, wobei das innere Volumen der Isolierkammern (200) durch einen zwischen den Wänden (135) des Deckels (130) und einer Bodenwand (115) des Hauptdurchführungselements (110) vorhandenen Raum definiert ist.

5. Durchführungshülse (100) wie in einem der vorhergehenden Ansprüche beansprucht, wobei die Isolierkammern (200) durch im Wesentlichen parallele Wände (135) des Deckels (130) gebildet sind.

6. Durchführungshülse (100) wie in einem der vorhergehenden Ansprüche beansprucht, wobei die innere Rohrleitung mindestens eine Leitung (20) umfasst, die mindestens eine der Isolierkammern (200) hindurchgeht.

7. Durchführungshülse (100) wie in einem der vorhergehenden Ansprüche beansprucht, wobei das Anschlussteil (120) eine Anzahl von Hackelementen (125) umfasst.

8. Durchführungshülse (100) wie in einem der vorhergehenden Ansprüche beansprucht, wobei die Isolierkammern (200) mindestens im Wesentlichen parallel zu einer Längsebene des Hauptdurchführungselements (110) gebildet sind.

9. Durchführungshülse (100) wie in einem der Ansprüche 1-7 beansprucht, wobei die Isolierkammern (200) mindestens im Wesentlichen senkrecht zu einer Längsebene des Hauptdurchführungselements (110) gebildet sind.

10. Verfahren zur Montage einer Durchführungshülse (100) umfassend einen Körper, der zum Einpassen durch eine Wand (10) bestimmt ist, wobei die Durchführungshülse (100) eine innere Rohrleitung (20) zum Empfang von mindestens einem Kabel hat, wobei der Körper mindestens ein Hauptdurchführungselement (110), ein Anschlussteil (120) und einen Deckel (130) umfasst, wobei der Körper weiterhin mit einer Anzahl von Isolierkammern (200) darin verstehen ist, wobei das Verfahren das Montieren eines Anschlussteils (120) umfasst, so dass das Anschlussteil (120) so angeordnet ist, dass es mindestens teilweise von einem Hauptdurchführungselement (110) umgeben ist, und dann das Anschlussteil (120) an dem Hauptdurchführungselement (110) befestigt wird und ein Deckel (130) montiert wird, so dass der Deckel (130) mindestens teilweise vom Anschlussteil (120) umgeben ist.

11. Verfahren wie in Anspruch 10 beansprucht, wobei es weiterhin den Schritt umfasst, in dem die montierte Durchführungshülse (100) eingepresst wird, so dass die Durchführungshülse (100) mindestens eine Wand (10) hindurchgeht.

## Revendications

1. Passe-fil (100) comprenant un corps destiné à être ajusté à travers une paroi (10), ayant le passe-fil (100) un moyen de conduit intérieur (20) pour recevoir au moins un câble, dans lequel le corps comprend au moins un élément de passe-fil principal (110), un élément de raccordement (120) disposé de façon qu'il est entouré au moins en partie par l'élément de passe-fil principal (110) et attaché à celui-ci, un nombre de chambres d'isolation (200) fournies à l'intérieur, et un couvercle (130), **caractérisé en ce que** le couvercle (130) est disposé de façon qu'il est entouré au moins en partie par l'élément de raccordement (120) et fourni avec des parois (135) s'étendant dans le corps de façon que les parois (135) définissent lesdites chambres d'isolation (200) une fois que le couvercle (130) a été assemblé dans l'élément de passe-fil principal (110).

2. Passe-fil (100) tel que revendiqué dans la revendication 1, dans lequel au moins une desdites chambres d'isolation sont des chambres d'air (200).

3. Passe-fil (100) tel que revendiqué dans la revendication 1 ou la revendication 2, dans lequel le corps comprend trois chambres d'isolation (200).

4. Passe-fil (100) tel que revendiqué dans l'une quelconque des revendications précédentes, dans lequel le volume intérieur des chambres d'isolation (200) est défini par un espace existant entre les parois (135) du couvercle (130) et une paroi inférieure (115) de l'élément de passe-fil principal (110).

5. Passe-fil (100) tel que revendiqué dans l'une quelconque des revendications précédentes, dans lequel les chambres d'isolation (200) sont formées par des parois essentiellement parallèles (135) du couvercle (130).

6. Passe-fil (100) tel que revendiqué dans l'une quelconque des revendications précédentes, dans lequel le moyen de conduit intérieur comprend au moins un conduit (20) traversant au moins une des chambres d'isolation (200).

7. Passe-fil (100) tel que revendiqué dans l'une quelconque des revendications précédentes, dans lequel l'élément de raccordement (120) inclut un nombre d'éléments d'accrochage (125).

8. Passe-fil (100) tel que revendiqué dans l'une quelconque des revendications précédentes, dans lequel les chambres d'isolation (200) sont formées au moins essentiellement parallèles à un plan longitudinal de l'élément de passe-fil principal (110).

9. Passe-fil (100) tel que revendiqué dans l'une quelconque des revendications 1-7, dans lequel les chambres d'isolation (200) sont formées au moins essentiellement perpendiculaires à un plan longitudinal de l'élément de passe-fil principal (110).

10. Procédé d'assemblage d'un passe-fil (100) comprenant un corps destiné à être ajusté à travers une paroi (10), ayant le passe-fil (100) un moyen de conduit intérieur (20) pour recevoir au moins un câble, dans lequel le corps comprend au moins un élément de passe-fil principal (110), un élément de raccordement (120) et un couvercle (130), étant le corps fourni en outre avec un nombre de chambres d'isolation (200) à l'intérieur, comprenant le procédé assembler un élément de raccordement (120) de façon que l'élément de raccordement (120) soit entouré au moins en partie par un élément de passe-fil principal (110), attacher alors l'élément de raccordement (120) à l'élément de passe-fil principal (110) et assembler un couvercle (130) de façon que le couvercle (130) soit entouré au moins en partie par l'élément de raccordement (120).

11. Procédé tel que revendiqué dans la revendication 10, comprenant en outre l'étape d'ajuster à pression le passe-fil (100) assemblé afin que le passe-fil (100) traverse au moins une paroi (10).
